# EUROPEAN PATENT APPLICATION

(11) **EP 2 375 124 A1**
(43) Date of publication of application: **12.10.2011**
(21) Application number: 09837532.2
(22) Date of filing: 09.10.2009
(51) Int. Cl.: F21S 2/00, F21V 29/00, G02F 1/13357, F21Y 103/00

(54) **ILLUMINATING DEVICE, DISPLAY DEVICE AND TELEVISION RECEIVER**

(30) Priority: 08.01.2009 JP 2009002411
(71) Applicant: Sharp Kabushiki Kaisha, Osaka-shi, Osaka 545-8522 (JP)
(72) Inventor: KUROMIZU, Yasumori, Osaka-shi, Osaka 545-8522 (JP)
(74) Representative: Müller-Boré & Partner Patentanwälte
(86) International application number: PCT/JP2009/067610
(87) International publication number: WO 2010/079646

(57) **Abstract**

A lighting device 110 includes a grounding member 150. The grounding member 150 includes a base member 151, a grounding terminal 99, light source holding conductors 152 and a wiring pattern 90. The grounding terminal 99 is arranged on the base member 151. The light source holding conductors 152 hold leads 136 of light sources 115 and electrically connect the leads to the grounding terminal 99. The wiring pattern 90 is formed on the base member 151 patterning so as to electrically connect the light source holding conductors 152 to the grounding terminal 99. The wiring pattern 90 is formed such that an area of the wiring pattern 90 between the light sources 115e and 115f is relatively larger than an area of the wiring pattern 90 between the light sources 115a and 115b.

## Description

### TECHNICAL FIELD

The present invention relates to a lighting device, a display device and a television receiver.

### BACKGROUND ART

Patent Document 1 discloses a lighting device configured to function as a backlight for a liquid crystal display device. This lighting device includes a printed circuit board for driving an inverter of a discharge lamp lighting device. A pattern having no electrical connection is formed in an entire area of the rear surface of the printed circuit board except for a high voltage area. The pattern functions as a heat dissipation layer and a dissipation effect of the pattern enables dissipation of heat from the inverter while a space is saved.
Patent Document 1: Japanese Unexamined Patent Publication No. 2004-119626

### Problem to be Solved by the Invention

Patent Document 1 only discloses the pattern is formed on the circuit board as a heat dissipation layer, that is, the technology disclosed therein is not for improving a heat dissipation performance in a specific area. Furthermore, the printed circuit board for driving the inverter dissipates heat but not dissipate heat dissipation on a discharge lamp side. In recent years, intensity of discharge lamps is more and more increased. Especially because a gas pressure is reduced and a current is increased, the discharge lamps tend to be heated. Therefore, the heat on the discharge lamp side needs to be efficiently dissipated.

### DISCLOSURE OF THE PRESENT INVENTION

An object of the present invention is to provide a lighting device in which heat from a light source is efficiently dissipated, especially, heat in a specific part of an area in which a light source is arranged is efficiently dissipated. Another object of the present invention is to provide a display device including the lighting device. Still another object of the present invention is to provide a television receiver including the display device.

### Means for Solving the Problem

To solve the above problem, a lighting device of the present invention includes light sources, a chassis and a grounding member. The light sources are arranged in a parallel layout and includes leads for external electrical connection. The chassis houses the light sources. The grounding member grounds the light sources. The grounding member includes a base member, a grounding terminal, light source holding conductors and a wiring pattern. The grounding terminal is arranged on the base member. The light source holding conductors are arranged on the base member. The light source holding conductors hold the leads of the light sources and electrically connect the leads to the grounding terminal. The wiring pattern is formed on the base member by patterning and electrically connects the light source holding conductors to the grounding terminal. The wiring pattern extends from one of ends of an arrangement area in which the light sources are arranged in the parallel layout to another one of the ends so as to cross each one of the light sources. At least one end area of the wiring pattern between two of the light sources arranged in an end area of the arrangement area is relatively larger than an area of the wiring pattern between two light sources arranged in a central area of the arrangement area.

According to such a lighting device, heat from the light sources can be efficiently dissipated by the wiring pattern. Specifically, the heat that transmits from the light sources to the leads, the light source holding conductors and then to the wiring pattern is dissipated by the wiring pattern. In the present invention, at least one end area of the wiring pattern between two light sources in the end area of the arrangement area is larger than the area between two light sources in the central area of the arrangement area. Therefore, the heat is efficiently dissipated by a part of the wiring pattern having the large area. By placing the lighting device such that the large area of the wiring pattern is at the upper side, the heat in an upper area in which the temperature tends to be high is further efficiently dissipated.

In the above lighting device, the wiring pattern may be formed such that at least the area between two light sources arranged in an upper end area of the arrangement area is relatively larger than the area between two light sources arranged in the central area of the arrangement area.
In this case, the heat in the upper area in which the temperature tends to be high is efficiently dissipated.

The wiring pattern may be formed such that the area between two light sources arranged in either end area of the arrangement area is relatively larger than the area between two light sources arranged in the central area of the arrangement area.
In this case, either one of the end areas is positioned at the upper side. As a result, the heat in the upper area in which the temperature tends to be high is efficiently dissipated.

The light sources may be arranged such that a distance between two light sources in the end area of the arrangement area is larger than a distance between two light sources in the central area of the arrangement area.
When the distance between the light sources in the end area of the arrangement is relatively large, the wiring pattern can be formed in a linear shape extending from one of the ends of the arrangement area to the other end with a constant width. With such a wiring pattern, the area of the wiring pattern between the light sources in the end area of the arrangement area relatively larger than the area between the light sources in the central area is provided. This makes the configuration of the present invention simple.

The base member is a plate member. The light source holding conductors are arranged on a first plate surface of the base member so as to penetrate the base member and project from a second surface of the base member. The wiring pattern and the grounding terminal electrically connected to the wiring pattern are formed on the second surface of the base member.
With this configuration, the heat that transmits from the light sources to the leads, the light source holding conductors and then to the wiring pattern is dissipated by the wiring pattern on the rear surface of the base member. Because the heat sources and the heat dissipation member are separated by the base member, high heat dissipation efficiency can be achieved.

Each of the light sources includes a glass tube and a ferrule provided as the lead and at an end of the glass tube as to cover an exterior of the glass tube.
With this configuration, the heat that transmits from the light sources to the ferrule, the light source holding conductor and then to the wiring pattern is dissipated by the wiring pattern.

Next, to solve the problem described earlier, a display device of the present invention includes the above lighting device and a display panel arranged on a light exit side of the lighting device.
Because the display device includes the lighting device having high light dissipation ability, a reduction in light-emitting efficiency due to the heat is less likely to occur. Therefore, the display device is highly reliable. A liquid crystal panel including liquid crystals may be used as a display panel.
The display device can be used for a television receiver. With this configuration, high reliability can be added to the television receiver.

### Effect of the Invention

According to the present invention, a lighting device in which heat from light sources can be efficiently dissipated can be provided. Especially in the lighting device, the heat dissipation in a specific part (an upper part) of an area where the light sources are arranged is improved.

### BRIEF DESCRIPTION OF THE DRAWINGS

FIG. 1 is an exploded perspective view of a television receiver according to the first embodiment;
FIG. 2 is a horizontal sectional view of a display device;
FIG. 3 is a front view of a lighting device;
FIG. 4 is a front view of the lighting device without discharge tubes;
FIG. 5 is a rear view of the lighting device;
FIG. 6 is a perspective view of a relay connector;
FIG. 7 is a magnified partial front view illustrating a connection between the relay connector and the discharge tube;
FIG. 8 is a side view of the relay connector;
FIG. 9 is a cross-sectional view illustrating how a ferrule of the discharge tube is stopped by a stopper;
FIG. 10 is a cross-sectional view illustrating a connection between the relay connector and a power supply board;
FIG. 11 is a perspective view of the discharge tube;
FIG. 12 is a rear view of the ferrule;
FIG. 13 is a perspective view of a first surface (a front surface) of a grounding member;
FIG. 14 is a perspective view of a light source holding conductor;
FIG. 15 is a cross-sectional view illustrating how the ferrule of the discharge tube is stopped by the stopper;
FIG. 16 is a magnified partial front view illustrating a connecting structure between the light source holding conductor and the discharge tube;
FIG. 17 is a perspective view of a second surface (a rear surface) of a grounding member;
FIG. 18 is an explanatory view schematically illustrating a relationship between a layout of the discharge tubes and a wiring pattern;
FIG. 19 is an explanatory view schematically illustrating a relationship between a layout of discharge tubes and a wiring pattern according to a grounding member of the second embodiment;
FIG. 20 is a perspective view of a second surface (a rear surface) of a grounding member according to the third embodiment; and
FIG. 21 is an explanatory view schematically illustrating a relationship between a layout of discharge tubes and a wiring pattern according to the grounding member of the third embodiment.

### EXPLANATION OF SYMBOLS

- 11:: Display panel
- 90:: Wiring pattern
- 99:: Grounding terminal
- 110:: Lighting device
- 113:: Chassis
- 114:: Relay connector
- 115:: Discharge tube (Light source)
- 116:: Power supply board
- 117:: Circuit board
- 118:: Board connector
- 134:: Glass tube
- 136:: Ferrule (Lead)
- 150:: Grounding member
- 151:: Support plate (Base member)
- 152:: Light source holding conductor

### BEST MODE FOR CARRYING OUT THE INVENTION

Embodiments of the present invention will be explained with reference to the drawings.

### <First embodiment>

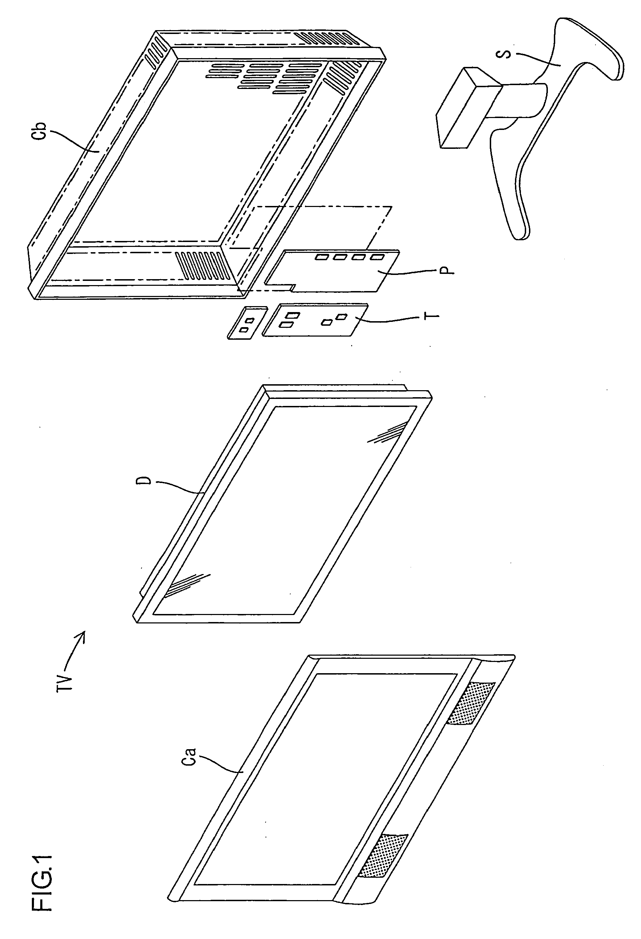

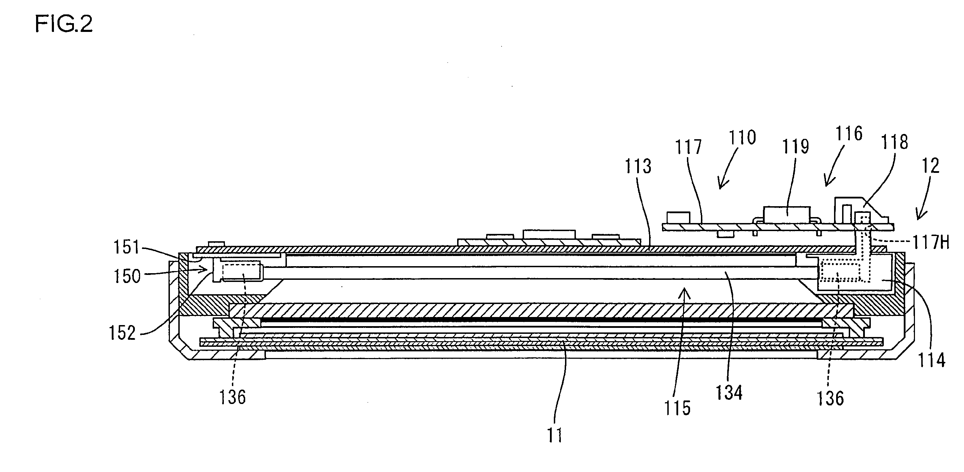

FIG. 1 is an exploded perspective view of a television receiver TV. The television receiver TV includes the display device D, a front cabinet Ca, a rear cabinet Cb, a main power source P, a tuner T and a stand S. The cabinets Ca and Cb house the display device D therebetween. The display device D has a landscape rectangular overall shape, and includes a display panel 11 and a lighting device 110 illustrated in FIG. 2. It is a so-called liquid crystal display device. The display panel 11 is arranged in front of the lighting device 110. The lighting device 110 functions as a backlight and illuminates the display panel 11 from the rear. FIG. 2 is a schematic illustration of the display device D. Therefore, shapes of relay connectors 114, board connectors 18, grounding members 150 and the other parts in FIG. 2 may be different from those in other drawings.

The display panel 11 has a known configuration in which liquid crystals are sealed in a gap between a transparent TFT substrate and a transparent CF substrate. On the TFT substrate, thin film transistors (TFTs) and pixel electrodes are provided. TFTs are switching components connected to source lines and gate lines that are perpendicular to each other. The pixel electrodes are connected to the TFTs. On the CF substrate, color filter having color sections of three primary colors of red (R), green (G) and blue (B) arranged in a matrix and counter electrodes are provided.

### Brief Description of Lighting Device 110

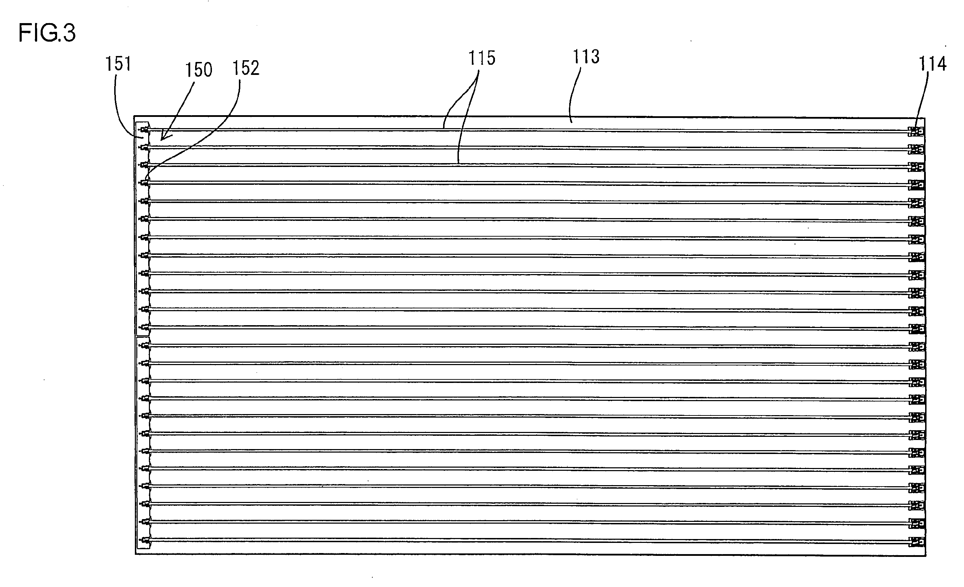

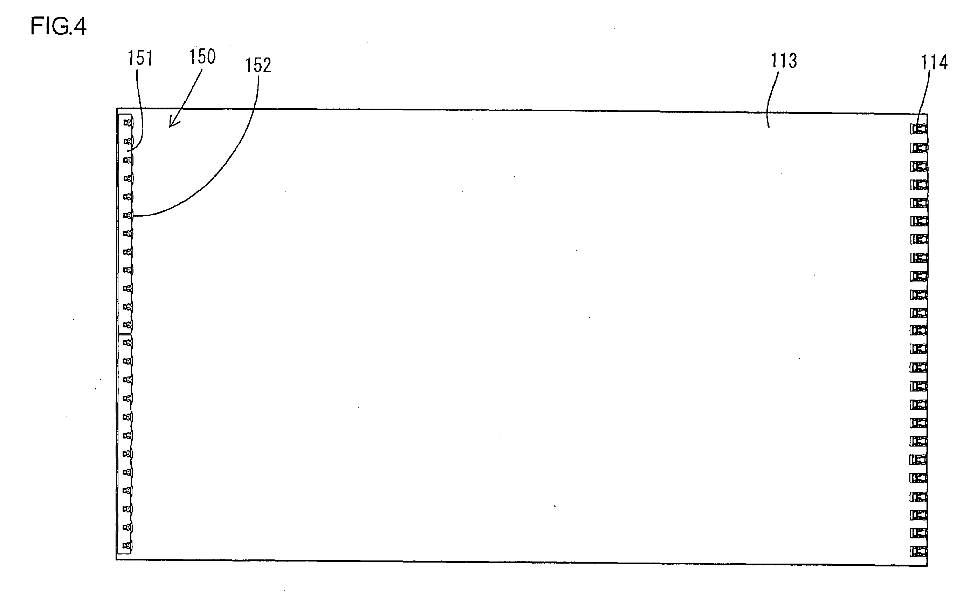

As illustrated in FIGS. 2 to 5, the lighting device 110 includes a lamp unit 12 and a power supply board 116. The lamp unit 12 includes a metal chassis 113, a plurality of discharge tubes 115, a plurality of relay connectors 114 and a grounding member 150. The chassis 113 has a landscape rectangular plate-like overall shape and functions as a lamp housing. The discharge tubes 115 are arranged on the front side of the chassis 113 in the vertical direction so as to be parallel to each other. The relay connectors 114 are arranged one above the other and along the right side edge of the chassis 113 so as to correspond to the discharge tubes 115. The grounding member is arranged at the left side edge of the chassis 113.

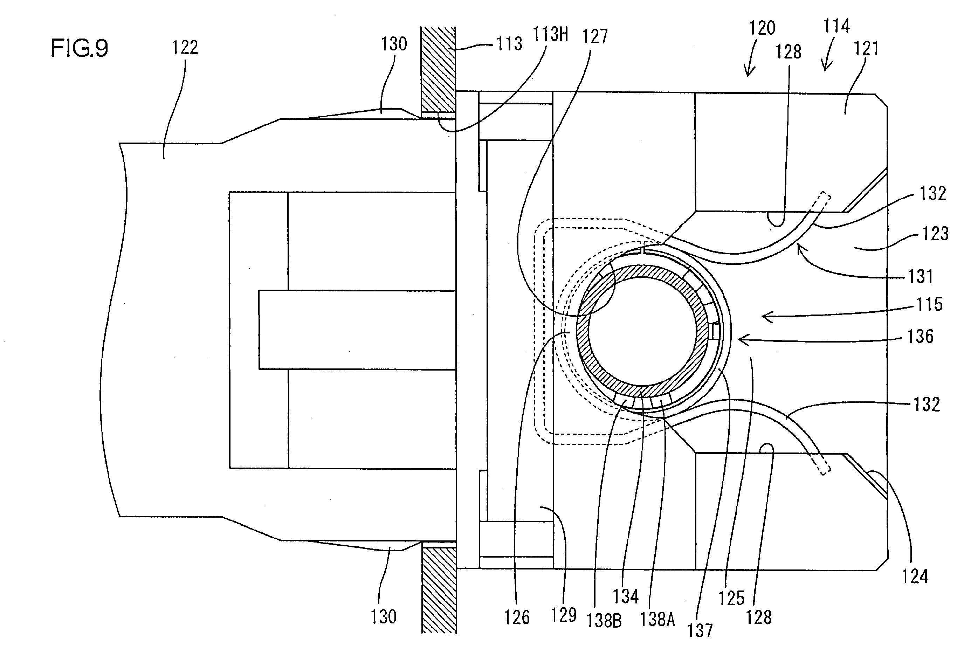

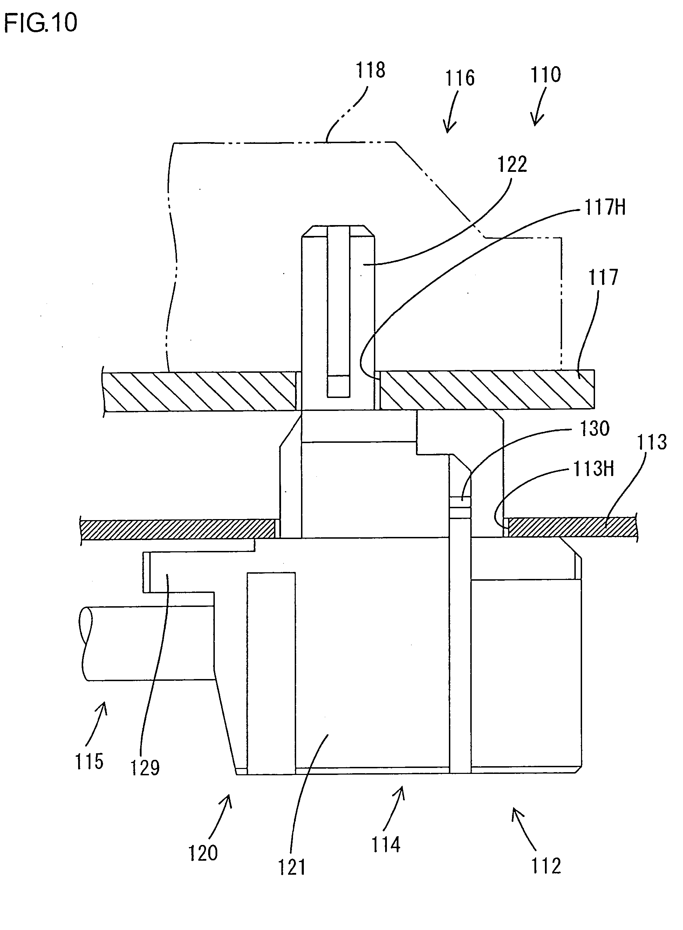

The power supply board 116 is arranged on the rear surface of the chassis 113. It supplies power to the discharge tubes 115 via the relay connectors 114. The chassis 113 has a plurality of mounting holes 113H. The mounting holes 113H are through holes that extend from the front to the rear of the chassis 13 at locations corresponding to ends of the discharge tubes 115 and each has a substantially square shape (see FIGS. 9 and 10). The relay connectors 114 are inserted in the respective mounting holes 113H so as to pass through.

### Power Supply Board 116

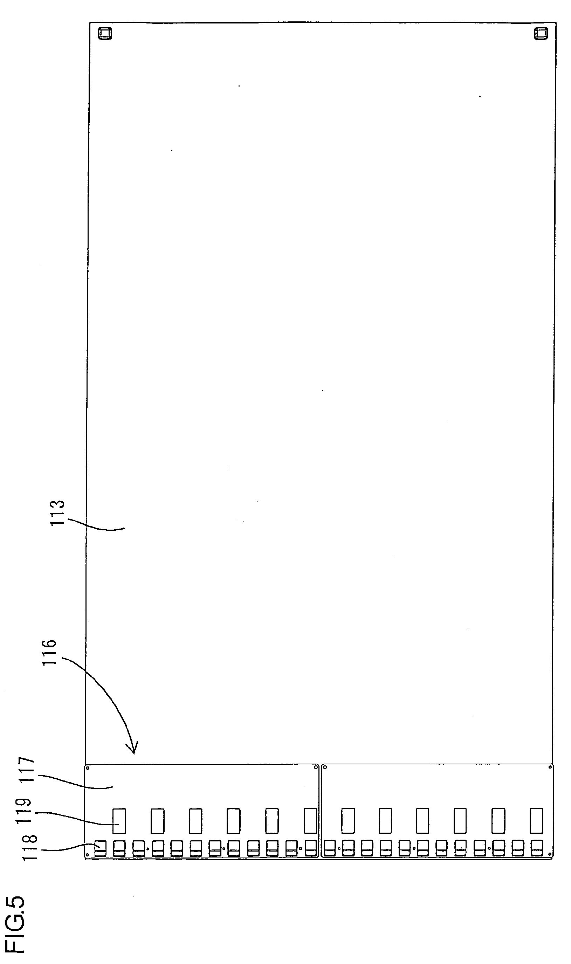

As illustrated in FIGS. 2 and 5, the power supply board 116 includes circuit boards 117, electronic components 119 and a plurality of board connectors 118. A circuit is formed on a rear surface (a surface opposite from the chassis 113) of each circuit board 117. The electronic components 119 are mounted on the rear surface of each circuit board 117. The board connectors 118 are mounted to the rear surface of each circuit board 117.
Each circuit board 117 has a portrait rectangular overall shape. A paper-based phenol resin copper-clad laminate (called as a paper phenol) is used for the circuit board 117. The circuit board 117 has a plurality of fixing holes 117H. Each fixing hole 117H is a through hole that extends from the front surface to the rear surface and formed in a portrait rectangular shape. The fixing holes 117H are formed so as to correspond to the respective relay terminals 131 (the relay connectors 114) along the left side edge and the right side edge of the circuit board 117 from the top to bottom. Each board connector 118 includes a housing made of synthetic resin and an output terminal (not shown) made of metal (e.g., a nickel silver alloy) and completely housed in the housing. The board connectors 118 are arranged along the right side edge and the left side edge of the circuit board 117 so as to correspond to the respective fixing holes 117H.

### Relay Connectors 14

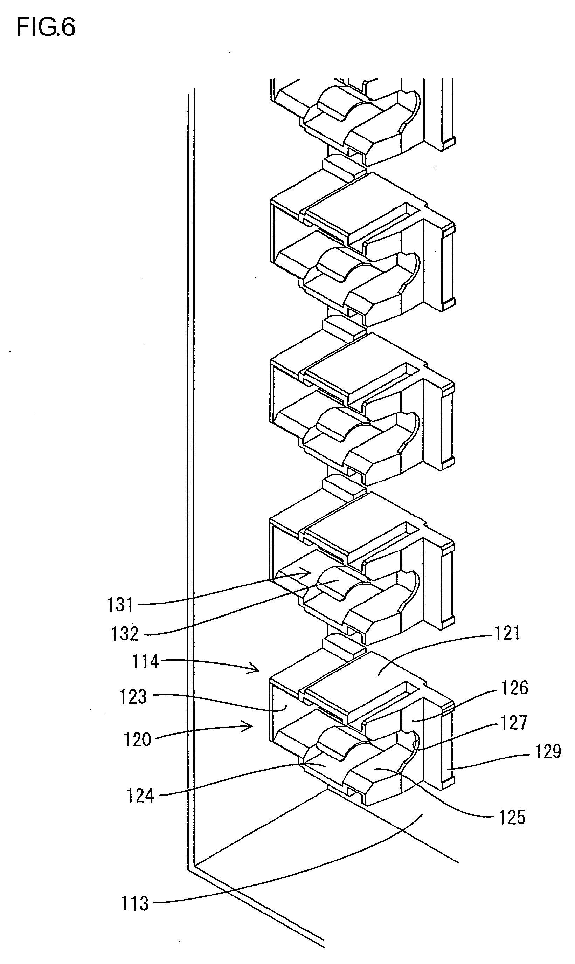

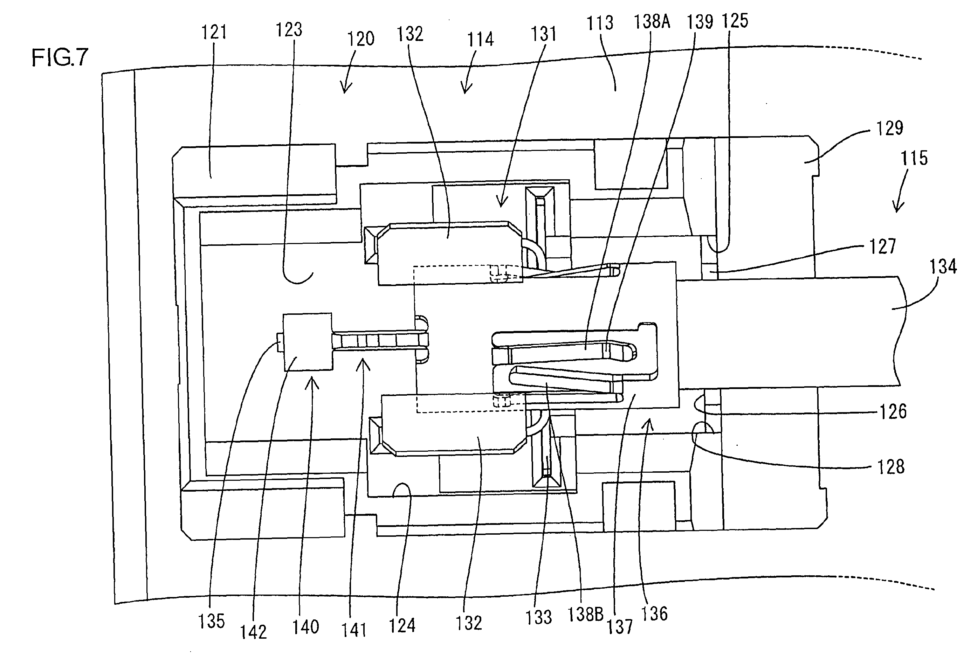

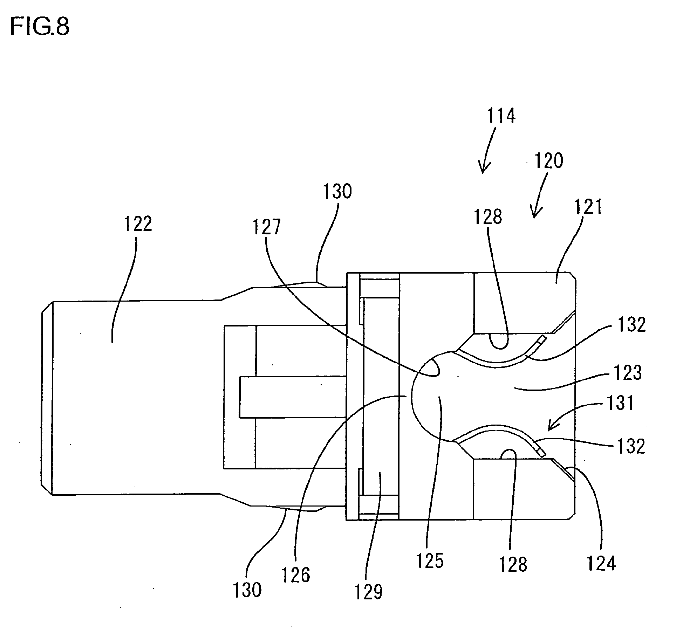

As illustrated in FIGS. 6 to 9, each relay connector 14 includes a holder 120 made of synthetic resin and a relay terminal 131 made of metal (e.g., stainless steel) and housed in the holder 120.
The holder 120 includes a box portion 121 and a wall portion 121. The box portion 121 has a block-like overall shape. The wall portion 122 projects from the back of the box portion 121 to the rear.
The box portion 121 includes a holding area 123 that opens from the front to the side (the side away from the side edge of the chassis 113). An opening on the front side of the holding area 123 is a receiving opening 124 for fitting the end of the discharge tube 115 (the ferrule 136) into the holding area 23 from the front. An opening on the side of the holding area 123 is an escape opening 125 configured to avoid interference to the glass tube 134, which could occur when the end of the discharge tube 115 is inserted in the holding area 123. A stopper 126 is formed by projecting an opening edge of the escape opening 125 inward in a plate-like shape. The stopper 126 makes the width of the escape opening 125 narrower and the shape of the escape opening 125 in a substantially U-shape. A vertical size of the escape opening 125 in the substantially U-shape is smaller than the inner diameter the main body 137 of the ferrule 136 and equal to or slightly larger than the outer diameter of the glass tube 134 of the discharge tube 115. A semicircular recess 127 is formed at the bottom of the escape opening 125. A curvature radius of the recess 127 is equal to or slightly larger than that of the outer periphery of the glass tube 134. Guides 128 are formed in a pair at the top and bottom edges of the escape opening 125 on a side more to the front than the recess 127.
The box portion 121 further includes a projection 129 that projects from a side surface having the escape opening 125 in a direction parallel to the chassis 113. The projection 129 is formed so as to separate between the escape opening 125 side and the front side of the chassis 113. Locking projections 130 are formed on the outer surfaces (the top surface and the bottom surface) of the box portion 121.

Each relay terminal 131 is held in the corresponding holder 120. The relay terminal 131 is prepared by bending a metal plate punched in a predetermined shape. It includes a pair of elastic holding pieces 132 and a board connecting portion 133. The elastic holding pieces 132 are pieces of plates formed into a substantially arch shape and vertically symmetric. The board connecting portion 133 has a plate-like shape and projects toward the rear. The elastic holding pieces 132 are placed in the holding area 123 such that they can elastically deform in directions away from each other. The vertical distance between the elastic holding pieces 132 is the smallest at a position more to the front than the recess 127 of the stopper 126. When the elastic holding pieces 132 are in free state in which they do not elastically deform, the smallest distance therebetween is smaller than the outer diameter of the main body 137 of the ferrule 136 of the discharge tube 115. The board connecting portion 133 projects from the rear surface of the box portion 121 out of the holder 120 to the rear along the wall portion 122.

During mounting of the relay connector 114 to the chassis 114, the wall portion 122 of the holder 120 is inserted in the mounting hole 113H from the front side of the chassis 113. The outer surfaces of the box portion 121 are brought in contact with the outer edges of the mounting hole 113H on the front side of the chassis 113. The locking projections 130 are held against the opening edges of the mounting hole 113H on the rear surface of the chassis 113. As a result, the chassis 113 is sandwiched between the stop surfaces 130 and the locking projections 130 from the frond and the rear, and the holder 120 is fixed to the chassis 113 such that the movement thereof in the mounting direction (the extending direction of the mounting hole 113H) is restricted. The relay connector 114 is mounted to the chassis 113. When the relay connector 114 is mounted to the chassis 113, the box portion 121, which is the front end portion of the holder 120, projects from the front surface of the chassis 113 (i.e. , being bare). The wall portion 122, which is the rear end portion of the holder 120, projects from the rear surface of the chassis 113 (i.e., being bare).

### Discharge Tube 115

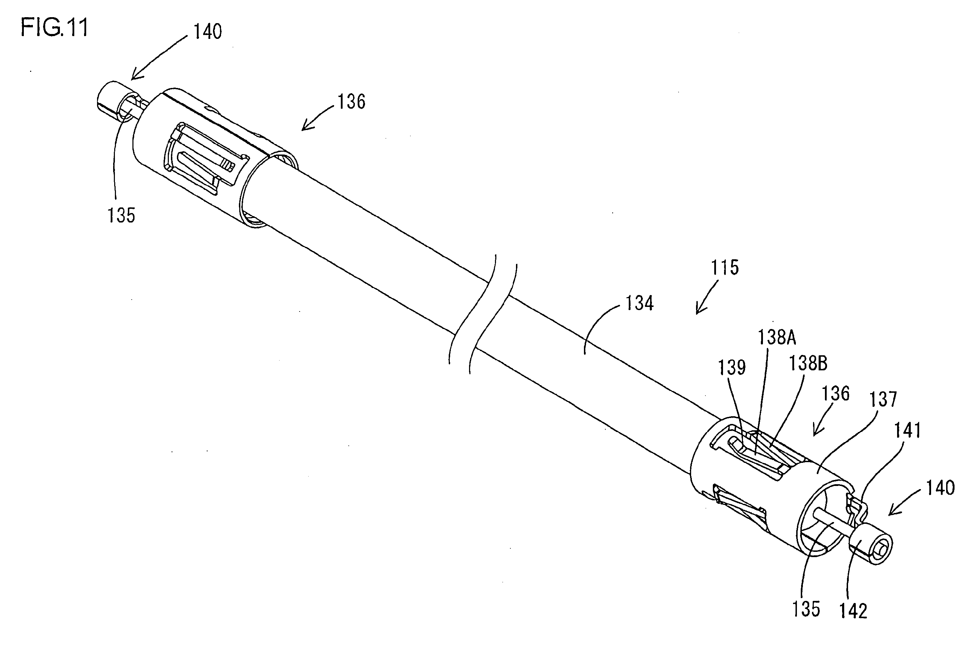

As illustrated in FIG. 11, each discharge tube 115 is a cold cathode tube. The discharge tube 15 includes a glass tube 134, outer leads 135 and the ferrules (leads) 136. The glass tube 134 has an elongated linear overall shape with a round cross section. The outer leads 135 project from respective ends of the glass tube 134 concentrically with the glass tube 134 and linearly. They are made of metal (e.g., nickel-contained or cobalt-contained metal) and have an elongated shape with a round cross section. The ferrules 136 are attached to the respective ends of the glass tube 134. The glass tube 134 encloses mercury therein and ends of the glass tube 134 are formed in dome-like shapes by thermal melting. The outer leads 135 penetrate through the dome-like shape portions.

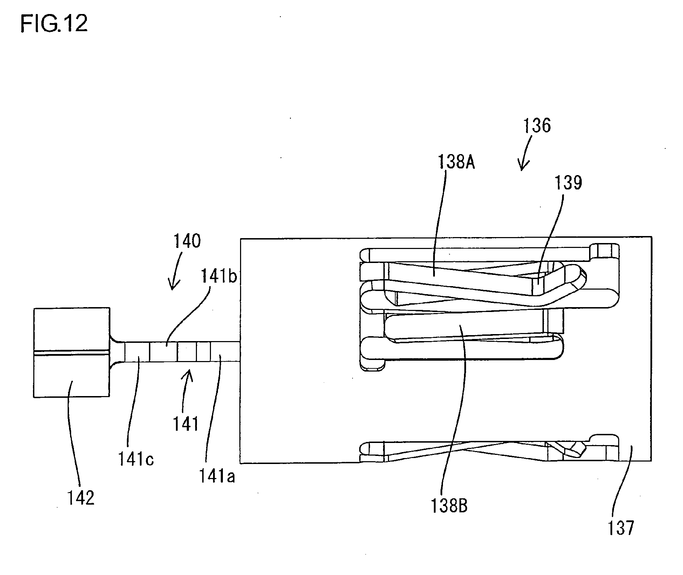

As illustrated in FIG. 12, each ferrule 136 is provided as a single part prepared by bending or hammering a metal plate (e.g., a stainless-steel plate) punched into a predetermined shape. It includes the body 137 and a conductive part 140. The body 137 has a substantially cylindrical overall shape concentric with the glass tube 134. The inner diameter of the body 137 is slightly larger than the outer diameter of the glass tube 134.

The body 137 includes three pairs of flexible holding parts 138A and 138B that are formed by cutting out parts of the body 137 so as to form slits around the flexible holding parts 138A and 138B at an equal angular interval.
The first elastic holding parts 138A of the pair of elastic holding parts 138A and 138B are cantilever parts that extend generally to the rear (specifically, slightly bent inward in the radial direction). They are elastically flexible in the radial direction with base ends (front ends) thereof as supporting points. A tip of each first flexible holding part 138A (rear end) includes a bent portion 139 that is bent outward in the radial direction. A surface of the bent portion 139 located on the outer curved side (i.e., a surface that faces inward) is a contact point that comes in contact with the periphery of the glass tube 134. An imaginary circle that connects contact points of three first elastic holding parts 138A is a circle concentric with the body 137. A diameter of the imaginary circle is smaller than the outer diameter of the glass tube 134 when the first elastic holding parts 138A are in the free state when the first elastic holding parts 138A are not elastically bent.

The second elastic holding part 138B of the pair of elastic holding parts 138A and 138B is provided adjacent to the first holding part 138A in the circumferential direction. An overall structure thereof is a cantilever piece that extends forward, that is, in an opposite direction to the first elastic part 138A (specifically, slightly bent inward in the radial direction). It is elastically flexible in the radial direction with a base end (a rear end) thereof as a supporting point. A tip of the second elastic holding part 138B is a contact point that comes in contact with the periphery of the glass tube 134. An imaginary circle that connects contact points of three second elastic holding parts 138B is a circle concentric with the body 137. A diameter of the imaginary circle is smaller than the outer diameter of the glass tube 134 when the second elastic holding parts 138B are in the free state when the second elastic holding parts 138B are not elastically bent.

The conductive part 140 extends from a rim of the body 137 in a cantilever manner. The conductive part 140 includes an elongated portion 141 that continues from the font rim of the body 137 and a drum-like portion 142 that projects from a front end (a distal end) of the elongated portion 141 further to the front.
The elongated portion 141 includes a base end portion 141a, a middle section 141b and a tip section 141c. The base end portion 141a extends from the body 137 on the same plane with respect to the body 137 and parallel to the axis of the body 137. The meddle section 141b extends from a distal end of the base end portion 141a inward in the radial direction toward the axis of the body 137. The tip section 141c extends from a distal end of the middle section 141b parallel to the axis of the body 137. The drum-like portion 142 continues from a distal end of the tip section 141c. A width of the elongated portion 141 is sufficiently smaller than a length thereof. Therefore, the elongated portion 141 is elastically flexible in the radial direction of the body 137 or in a direction that crosses the radial direction (a direction that crosses a length direction of the elongated portion 141), or elastically twisted around itself as a torsion axis.
The drum-like portion 142 is provided by forming a piece extends from the distal end of the elongated portion 141 and jetties in a horizontal direction into a drum-like shape. It is positioned such that an axis thereof substantially matches the axis of the body 137. The drum-like portion 142 can change a position thereof around the axis or in the radial direction of the ferrule 136 according to the elastic deflection of the elongated portion 141.

### Attachment of the Discharge Tube 115 to the Relay Connectors 114

The discharge tubes 115 are attached to the relay connectors 114. During the attachment, each discharge tube 115 is held in a horizontal position and brought close to the front of the chassis 113. Then, the ferrule 136 at one of the ends of the glass tube 134 is fitted in the holding area 123 of the relay connector 114 from the front. The elastic pressing pieces 132 are elastically deflected by the body 137 of the ferrule 136 so as to open. After the body 137 passes through the smallest gap between the elastic pressing pieces 132, the elastic pressing pieces 132 draw the body 137 into the back area of the holding area 123 with elastic restoring forces thereof and the body 137 is brought in contact with the bottom of the holding area 123. Then, the attachment of the discharge tube 115 is completed. The other end of the discharge tube 115 is connected to a light source holding conductor 152 of the grounding member 150, which will be explained later.

### Brief Description of the Grounding Member

As illustrated in FIGS. 2 to 4, one of the ends of each discharge tube 115 different from the end held by the relay connector 114 is held by the light source holding conductor 152 of the grounding member 150.

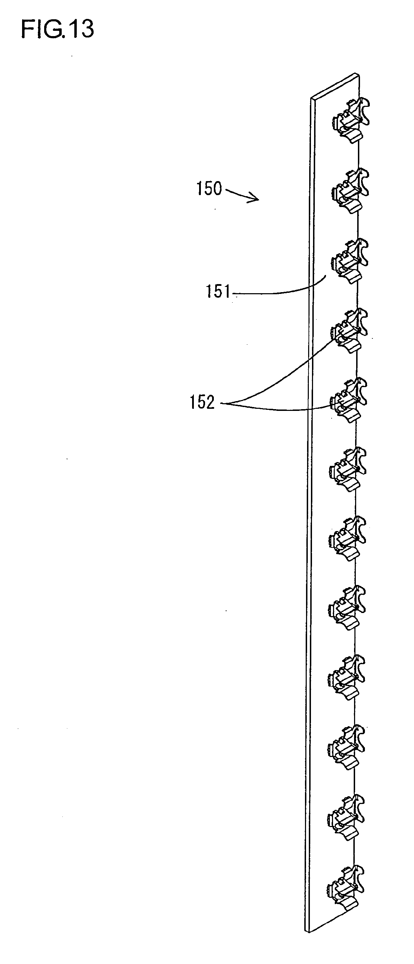

As illustrated in FIG. 13, the grounding member 150 includes an elongated support plate (a base member) 151 and a plurality of light source holding conductors 152. The support plate 151 is mounted to the chassis 113 along one of the side edges of the chassis 113. The light source holding conductors 152 are mounted to the support plate 151. The support plate 151 has three mounting holes 151H, which are through holes, for each light source holding conductor 152. Legs 157 of the light source holding conductor 152 are inserted in the respective mounting holes 151H. The light source holding conductors 152 are electrically connected to the rear surface of the support plate 151 (on the side opposite from the side on which the discharge tubes 115 are arranged). The support plate 151 is a substrate made of glass epoxy resin.

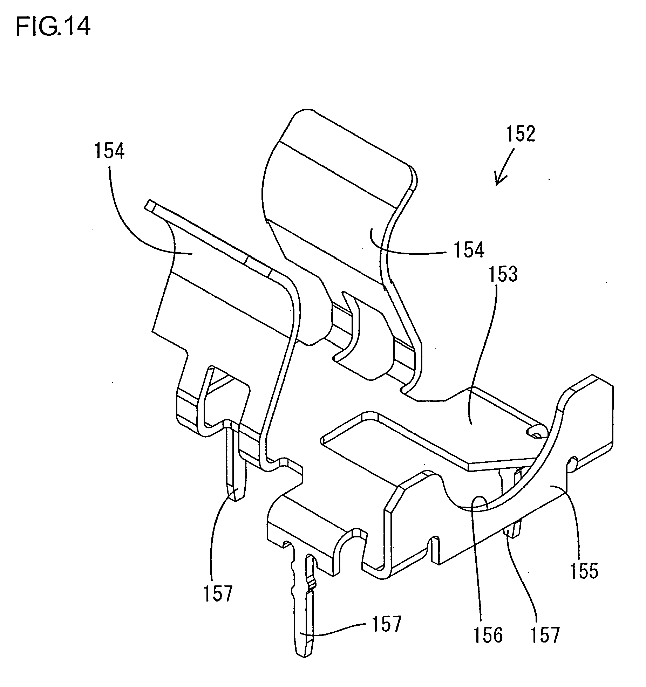

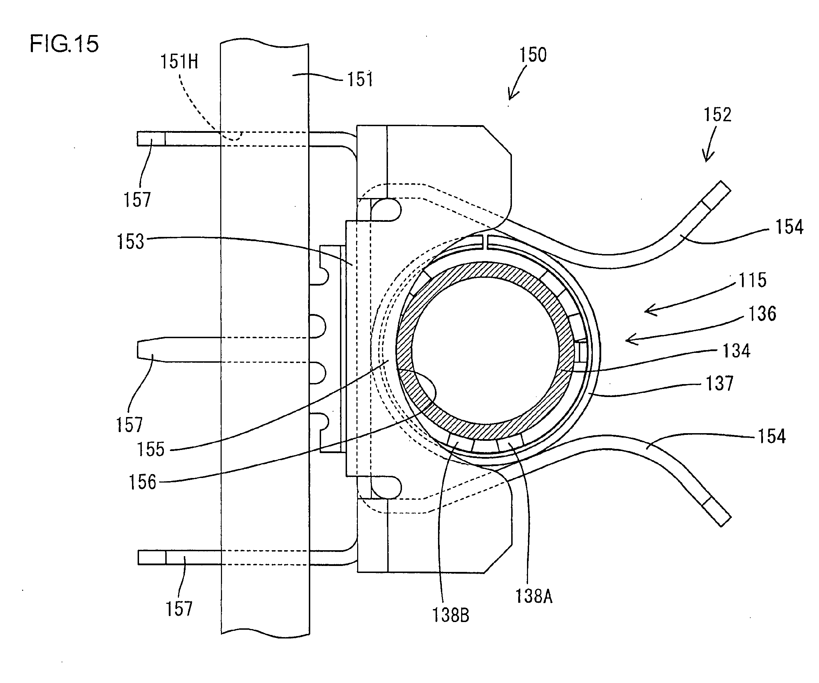

As illustrated in FIGS. 14 and 15, each light source holding conductor 152 is a piece prepared by bending a metal plate (e.g., a nickel-silver alloy plate) punched into a predetermined shape. It includes a base 153, a pair of elastic pressing pieces 154 and a stopper 155. The elastic pressing pieces 154 extend from an upper edge and a lower edge of the base portion 153 to the front, respectively, and are vertically symmetric. The stopper 155 extends from one of side edges of the base portion 153 to the front. The elastic pressing pieces 154 are provided in an area close to a side edge opposite to the edge from which the stopper 155 extends. They are curved so as to bulge toward each other. The elastic pressing pieces 154 are elastically flexible so as to widen a gap between them. The smallest gap between the elastic pressing portions 154 in the free state when the elastic pressing pieces 154 are not elastically bent is smaller than the outer diameter of the glass tube 134 of the discharge tube 115. The stopper 155 stands from the base 153 in a direction perpendicular to the axis of the discharge tube 115, and includes a concave portion 156 that is formed by cutting into a substantially arch shape.

Three legs 157 are integrally provided with the base 153. Two of the three legs 157 are located between the elastic pressing portions 154 and the stopper 155 and project from the upper and the lower edges of the base portion 153, respectively, toward an opposite side (a rear surface side) from the side where the elastic pressing portions 154 and the stopper 155 are provided. The rest of the legs 157 projects from the side edge of the base portion 153 on the opposite side from the side where the stopper 155 is provided and at a middle point between the elastic pressing portions 154 toward the opposite side (the rear surface side) from the side where the elastic pressing portions 154 and the stopper 155 are provided.

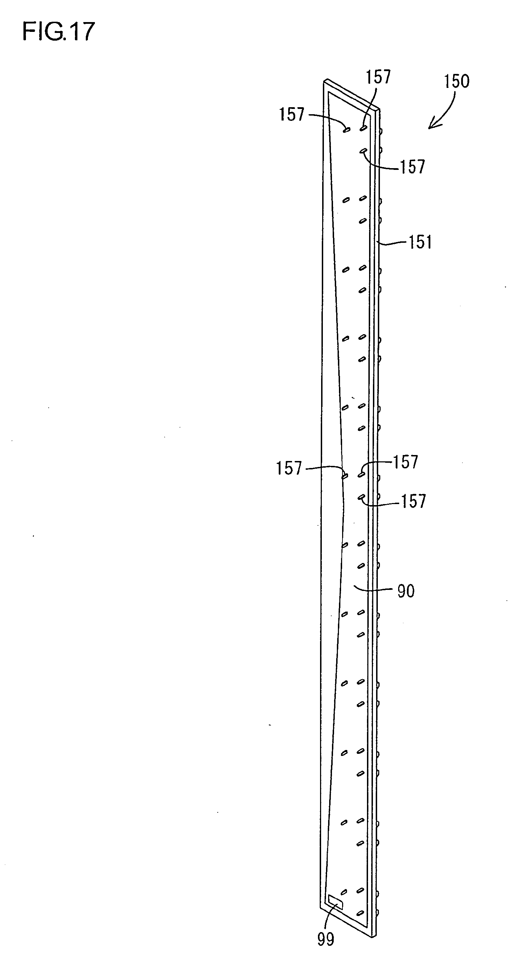

Each light source holding conductor 152 is not housed in a housing member such as a synthetic resin housing. It is bare and fixed to the support plate 151 by soldering with the legs 157 passed through the mounting holes 151H (see FIG. 17). The light source holding conductors 152 are electrically connected to a ground terminal 99 via a wiring pattern 90 on the rear surface of the support plate 151.

The wiring pattern 90 extends from one of ends of an arrangement area of the discharge tubes 115 in which the discharge tubes 115 are arranged in a parallel layout to the other end. The wiring pattern 90 is formed with an area of the wiring pattern between two discharge tubes 115, 115 defined as follows. At least one end area of the wiring pattern 90 between two discharge tubes 115a and 115b (or 115c and 115d) arranged in an end area of the arrangement area is relatively larger than the area of the wiring pattern 90 between two discharge tubes 115e and 115f arranged in the central area of the arrangement area (both end areas are relatively larger than the central area in this embodiment). Specifically, the width of the wiring pattern 90 gradually decreases, that is, continuously decreases from the end areas to the central area. Therefore, the area of the wiring pattern 90 between the discharge tubes 115a and 115b on at least the upper side (to which the arrow in the figure points) is larger than the area between the discharge tubes 115e and 115f at the center.

### Attachment of the Discharge Tube 115 to the Light Source Holding Conductor 152

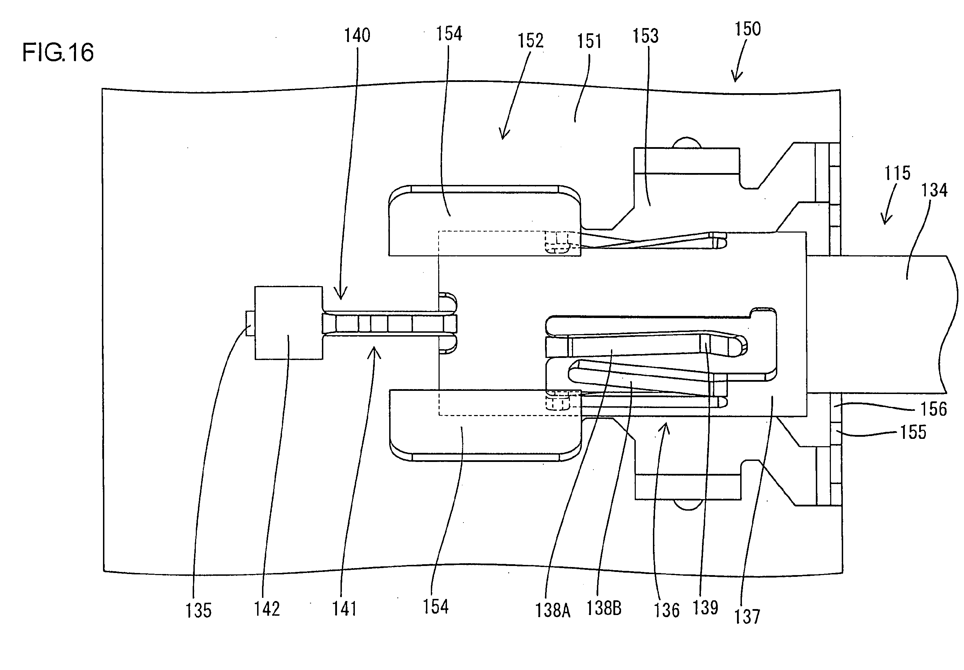

During the attachment of the discharge tube 115 to the light source holding conductor 152, the discharge tube 115 is held in the horizontal position and brought closer to the front of the chassis 113 as illustrated in FIG. 16. Then, the end of the glass tube 134 and the ferrule 136 are fitted between the upper and the lower elastic pressing pieces 154 from the front. The elastic pressing pieces 154 are elastically deflected by the body 137 of the ferrule 136 so as to further open in the vertical direction. After the body 137 passes through the area in which the gap between the elastic pressing portions 154 is the smallest, the elastic pressing pieces 154 draw the body 137 into the back area of the base portion 153 side with elastic restoring forces thereof and the body 137 is brought into contact with the bottom of the base portion 153. Then, the mounting of the discharge tube 115 is completed. The other end of the discharge tube 115 is mounted to the relay connector 114 as described above.

### Functions and Effects of the First Embodiment

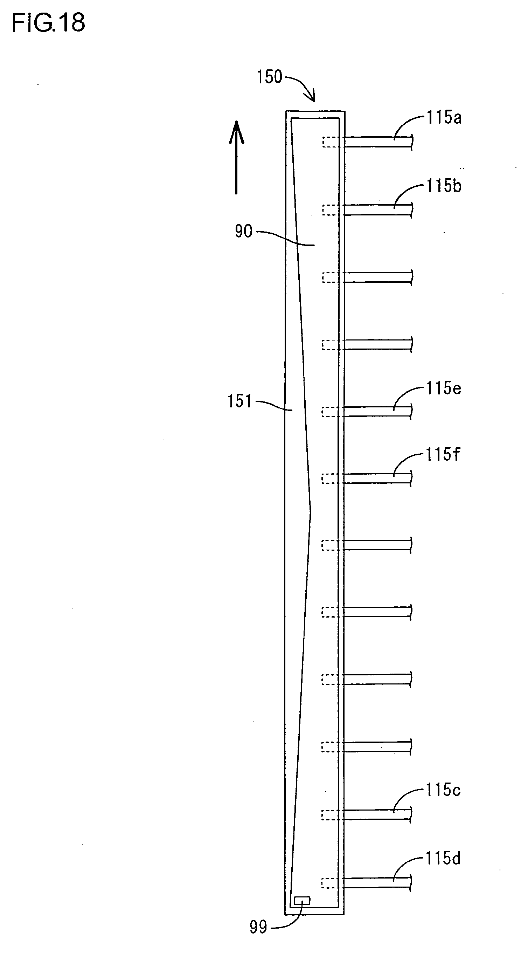

The configuration of the first embodiment is described above. With the configuration of the first embodiment, the lighting device 110 can efficiently dissipate the heat from the discharge tubes 115 by the wiring pattern 90. Specifically, the heat that transmits from the discharge tubes 115 to the ferrule 136, the light source holding conductor 152 and then to the wiring pattern 90 is dissipated by the wiring pattern 90. In this embodiment, the wiring pattern 90 is formed with the area of the wiring pattern 90 between two discharge tubes 115, 115 defined as follows. At least one end area of the wiring pattern 90 between two discharge tubes 115a and 115b (or 115c and 115d) arranged in the end area of the arrangement area is relatively larger than the area of the wiring pattern 90 between two discharge tubes 115e and 115f in the central area of the arrangement area (both end areas are relatively larger than the central area in this embodiment). The wiring pattern 90 having the end area larger than other areas efficiently dissipates the heat. Furthermore, the lighting device 110 is placed with the end area of the arrangement area (on the discharge tube 115a, 115b side) of the wiring pattern 90 having the large area on the upper side (to which the arrow in FIG. 18 points). Therefore, the heat in the upper area in which the temperature tends to be high is further efficiently dissipated.

The support plate 151 of the grounding member 150 is a plate member. The light source holding conductors 152 are arranged on the front surface (a first plate surface) of the support plate 151. The light source holding conductors 152 penetrate through the support plate 151 and project from the rear surface (a second surface) of the support plate 151. The wiring pattern 90 and the grounding terminal 99 that is electrically connected to the wiring pattern 90 are arranged on the rear surface of the support plate 151. With this configuration, the heat that transmits from the discharge tubes 115, the light source holding conductors 152 and then to the wiring pattern 90 on the rear surface of the support plate 151 is dissipated by the wiring pattern 90. Because the heat sources and the heat dissipating part are separated by the support plate 151, the high heat dissipation efficiency can be achieved.

### <Second embodiment>

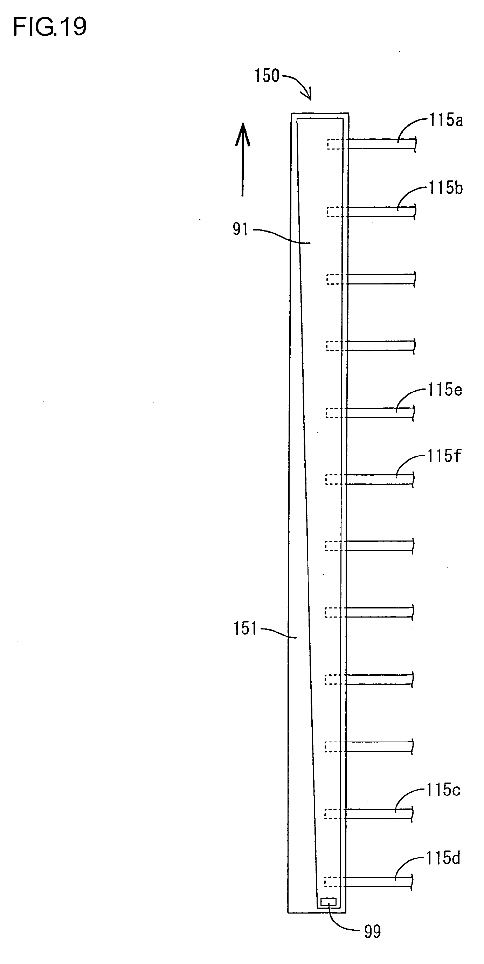

Next, the second embodiment of the present invention will be explained with reference to FIG. 19.
In the second embodiment, a wiring pattern in a different shape from that of the first embodiment is used. Other components are the same as the first embodiment. The same components as those in the first embodiment will be indicated by the same symbols, and the configurations, the functions and the effects thereof will not be explained.

In this embodiment, a wiring pattern 91 is formed on the rear surface of the support plate 151 of the grounding member 150 with an area between two discharge tubes 115, 115 defined as follows. An area between two discharge tubes 115e and 115f on the upper side (to which the arrow in FIG. 19 points) is relatively larger than an area between two discharge tubes 115a and 115b in the central area. An area between two discharge tubes 115c and 115d on the lower side is relatively small.
This configuration also enables efficient dissipation of the heat in the upper area in which the temperature tends to be high with the wiring pattern 91 having a relatively large area in the upper area.

### <Third embodiment>

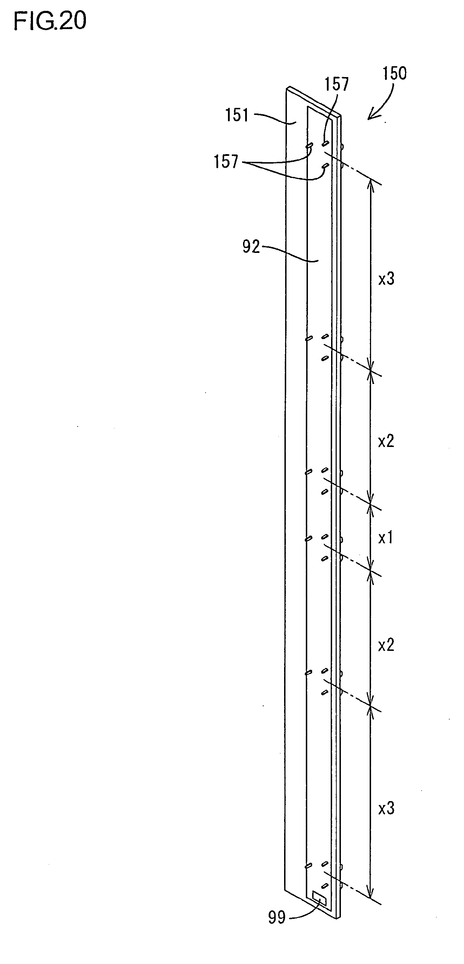

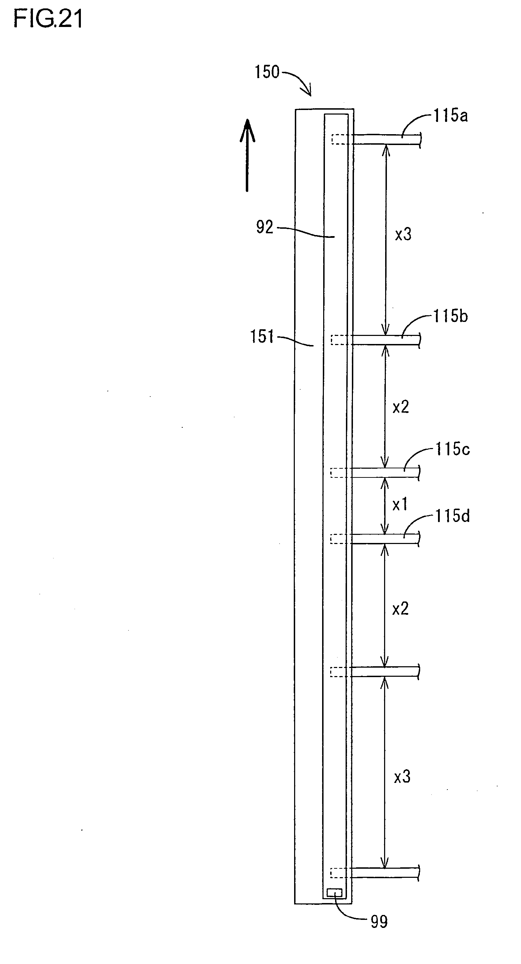

Next, the third embodiment of the present invention will be explained with reference to FIGS. 20 and 21.
In the third embodiment, the arrangement layout of the discharge tubes is different, and a wiring pattern in a different shape from that of the first embodiment is used. Other components are the same as the first embodiment. The same components as those in the first embodiment will be indicated by the same symbols, and the configurations, the functions and the effects thereof will not be explained.

In this embodiment, the discharge tubes 115 are arranged at irregular intervals as illustrated in FIG. 21. A distance (x3) between two discharge tubes 115a and 115b arranged in an end area of the arrangement area thereof is relatively larger than a distance (x1) between two discharge tubes 115c and 115d arranged in the central area of the arrangement area. As illustrated in FIG. 21, the distances have relationships expressed by x1<x2<x3. As illustrated in FIG. 20, the light holding conductors 152 of the grounding member 150 are arranged on the support plate 151 in a similar layout as the layout of the discharge tubes 115 that are arranged at irregular intervals. Namely, The light holding conductors 152 are arranged at irregular intervals so as to correspond to the discharge tubes 115. The wiring pattern 92 is in a form of line with a constant width so as to extend along the arrangement direction of the discharge tubes 115. Namely, the width does not change although it changes in the first embodiment.

In the layout of the discharge tubes 115 of this embodiment, the distance between the discharge tubes 115a and 115b arranged in the end area is relatively large. Therefore, with the wiring pattern 92 formed in a linear shape with a constant width from one end of the arrangement area to the other end, the relatively larger area of the wiring pattern 92 is provided between the discharge tubes 115, 115 in the end area of the arrangement area than the central area thereof. As a result, the heat in the upper area in which the temperature tends to be high is efficiently dissipated by the part of the wiring pattern 92 having the relatively large area.

### <Other embodiments>

The present invention is not limited to the above embodiments explained in the above description. The following embodiments may be included in the technical scope of the present invention, for example.
(1) The discharge tubes are not limited to the cold cathode tubes. Hot cathode tubes, xenon tubes, fluorescent tubes and other types of discharge tubes may be used.
(2) Switching components in the display panel of the display device are not limited to TFTs. MIMs (Metal Insulator Metals) and other types of switching components may be used.
(3) The display device is not limited to the liquid crystal display device. Various kinds of display devices that require lighting devices on the back of display panels can be used.

## Claims

1. A lighting device comprising:
light sources arranged in a parallel layout and including leads for external electrical connection;
a chassis housing the light sources; and
a grounding member grounding the light sources, the grounding member including:
a base member;
a grounding terminal arranged on the base member;
light source holding conductors arranged on the base member, holding the leads of the light sources, and electrically connecting the leads to the grounding terminal; and
a wiring pattern formed on the base member by patterning and electrically connecting the light source holding conductors to the grounding terminal, the wiring pattern extending from one of ends of an arrangement area in which the light sources are arranged in the parallel layout to another one of the ends so as to cross each one of the light sources and at least one end area of the wiring pattern between two of the light sources arranged in an end area of the arrangement area is relatively larger than an area of the wiring pattern between two light sources arranged in a central area of the arrangement area.

2. The lighting device according to claim 1, wherein the wiring pattern is formed such that at least the area between two light sources arranged in an upper end area of the arrangement area is relatively larger than the area between two light sources arranged in the central area of the arrangement area.

3. The lighting device according to claim 1, wherein the wiring pattern is formed such that the area between two light sources arranged in either end area of the arrangement area is relatively larger than the area between two light sources arranged in the central area of the arrangement area.

4. The lighting device according to any one of claims 1 to 3, wherein the light sources are arranged such that a distance between two light sources in the end area of the arrangement area is larger than a distance between two light sources in the central area of the arrangement area.

5. The lighting device according to any one of claims 1 to 4, wherein:
the base member is a plate member;
the light source holding conductors are arranged on a first plate surface of the base member so as to penetrate the base member and project from a second surface of the base member; and
the wiring pattern and the grounding terminal electrically connected to the wiring pattern are formed on the second surface of the base member.

6. The lighting device according to any one of claims 1 to 5, wherein each of the light sources includes a glass tube and a ferrule provided as the lead and at an end of the glass tube so as to cover an exterior of the glass tube.

7. A display device, comprising:
the lighting device according to any one of claims 1 and 6; and
a display panel arranged on a light exit side of the lighting device.

8. The display device according to claim 7 wherein the display panel is a liquid crystal panel including liquid crystals.

9. A television receiver comprising the display device according to any one of claims 7 and 8.
